# EUROPEAN PATENT APPLICATION

(11) **EP 3 291 164 A1**
(43) Date of publication of application: **07.03.2018**
(21) Application number: 17185800.4
(22) Date of filing: 10.08.2017
(51) Int. Cl.: G06Q 50/00

(54) **QUINQUELATERAL RELATIONSHIP-BASED KINSHIP NETWORK SYSTEM**

(30) Priority: 29.08.2016 CN 201610767378
(71) Applicant: Hunan Kaopu Technology Incorporated Company, Changsha Hunan (CN)
(72) Inventor: Wei, Zhou, Huangxing Town, Changsha County, Hunan (CN)
(74) Representative: Cabinet Chaillot

(57) **Abstract**

The present invention discloses a quinquelateral relationship-based kinship network system, comprising an Internet platform, a registration and login module, an information storage module, an information modification module, an opinion feedback module, a system function module, and a background management module. According to the social network system provided in the present invention, a kinship network is established based on an Internet platform, and a kinship architectural diagram is constructed. An infinitely extending dimensional network system is established by extending outwards depending on immediate relatives, and improves credibility and customer loyalty of the Internet.

## Description

### FIELD OF THE INVENTION

The present invention relates to the field of Internet technologies, and in particular, to a quinquelateral relationship-based kinship network system.

### BACKGROUND OF THE INVENTION

With the development of the Internet, more and more people use smartphones, and they use the phones almost every day. During the two sessions (the National People's Congress and the Chinese People's Political Consultative Conference) in 2016, China proposed the ideas of strengthening innovation and developing three rural issues (agriculture, rural areas and farmers). The national policy supports and encourages innovation on the Internet. Under the current domestic situation, in terms of instant messaging, there have been application systems themed with friendship (WeChat, QQ, Weibo, or the like) and love (Baihe, Jiayuan, Zhenai, or the like). However, few applications are particularly themed with kinship.

It is well known that, the Chinese people have been family-oriented since ancient times till today. Everyone thinks highly of kinship and it is difficult for them to discard the kinship. Parents and children, husband and wife, and relatives depend on, take care of and protect each other, and are bound together. However, as relationship networks of the members gradually become larger, physical distances between the members are gradually widened. As a result, family members have reduced opportunities to contact each other, and even no opportunities are available for a long time. Consequently, a psychological distance is gradually produced between some family members and the whole family, and some finally are even disconnected from communication among the family, especially for a female in the family. For the reasons of discrimination against females in traditional Chinese genealogy and marriage of the females, the females gradually break away from the relationship networks of the family.

The Internet brings great convenience to people but also causes a serious credit crisis to the society. In recent years, there are a growing number of cases of dishonesty caused by using the Internet, people think poorly of the credibility of the Internet, and some even consider that credibility is lost in the Internet.

### SUMMARY OF THE INVENTION

An objective of the present invention is to provide a quinquelateral relationship-based kinship network system, to resolve the problems in the prior art.

A quinquelateral relationship-based kinship network system comprises an Internet platform, a registration and login module, an information storage module, an information modification module, an opinion feedback module, a system function module, and a background management module. The Internet platform is connected to the registration and login module, and the registration and login module comprises a registration unit and a login unit. The registration unit is connected to an information storage module, and the information storage module comprises a basic information collection unit, a basic information matching unit, and a basic information storage unit. The login unit is separately connected to the information modification module, the opinion feedback module, and the system function module, and the system function module comprises a search unit, a chatting unit, a game unit, and a sharing platform. The information modification module is connected to the basic information matching unit in the information storage module. The Internet platform, the registration and login module, the information storage module, the information modification module, the opinion feedback module, and the system function module are all connected to the background management module.

Preferably, the basic information collection unit is configured to collect information comprising an avatar, a name, an identity card number, an ancestral home, personal academic background information, family member information, and a contact method.

Preferably, the contact method comprises any one or more of a mobile phone number, a fixed-line number, a QQ number, a WeChat account number, and a Weibo account number.

Preferably, the basic information matching unit is provided with a prestored information architecture, a screening and analysis system, and an information matching system.

Preferably, the basic information storage unit uses a five-element theory to construct a kinship network centered on a user, in which the user is separately connected to the father, mother, child, spouse, and brother/sister of the user, and then construct kinship networks respectively centered on the father, mother, child, spouse, and brother/sister of the user, so as to form a whole quinquelateral spectrum by using an individual family as the smallest unit.

Preferably, the background management module comprises an operation and management unit, a system maintenance unit, an opinion feedback receiving unit, and a system program modification unit.

The present invention further provides a working procedure of a quinquelateral relationship-based kinship network system, comprising the following steps:
S1: accessing, by a user, a registration and login module by using an Internet platform, registering with a registration unit in the registration and login module, and filling in personal information according to a prompt; and collecting, by a basic information collection unit in an information storage module, the personal information filled in by the user, inputting the personal information of the user into a basic information matching unit for analysis and matching, and storing a final result of matching in a basic information storage unit;
S2: accessing, by the user, the registration and login module by using a login unit after successful registration, wherein the user may modify the registered personal information by using an information modification module, the modified content is synchronized to the basic information matching unit and then stored in the basic information storage unit, after logging in to the login unit, the user may further give an opinion about a kinship social network system, the opinion given by the user is transferred to a background management module, so that an administrator modifies and improves the kinship social network system according to the received opinion, and after logging in to the login unit with the user's identity, the user may further access a system function module, and perform, by using a search unit, a chatting unit, a game unit, and a sharing platform in the system function module respectively, operations of looking for someone, chatting, playing a game, and sharing information; and
S3: supervising and controlling, by the background management module, the operation processes of steps S1 and S2, and updating and maintaining the system in real time.

According to the social network system provided in the present invention, a social system themed with kinship is established based on an Internet platform, a kinship architectural diagram is constructed, and distances between people are narrowed. With kinship used as a link between people, a heart-to-heart bridge is built between relatives. For every user, a family system of the user can be established. In the system, a five-element theory is used, so that discrimination against females in a traditional genealogy is prevented, and the females also play an important role in the entire kinship architecture. In addition, once one user downloads and registers with the system, information about at least five persons can be obtained, thereby constantly increasing the base number of seed users, leading to viral spreading. The system further extends outwards depending on immediate relatives who are credible, so that credibility of the Internet is improved while an infinitely extending dimensional network system is established. Moreover, four features of the system: instructiveness, seriousness, interactivity, and entertainment ensure great customer loyalty of the system.

### BRIEF DESCRIPTION OF THE DRAWINGS

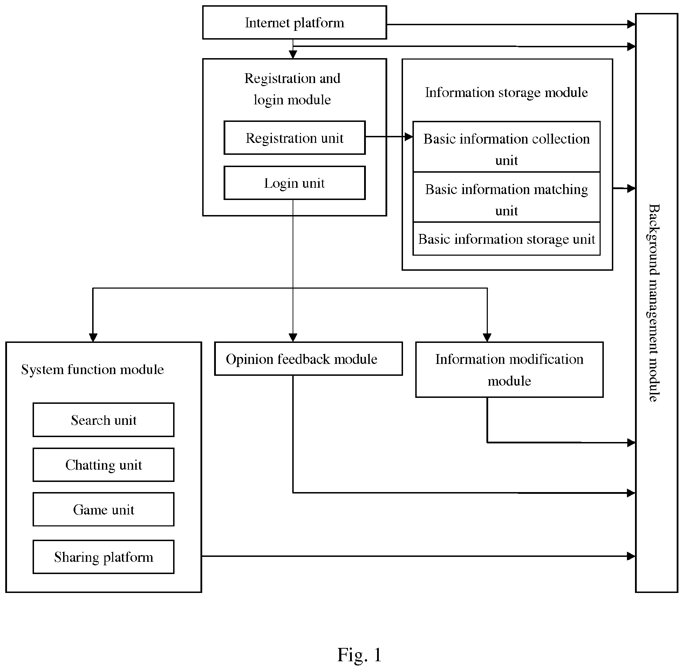

Fig. 1 is a structural block diagram of a quinquelateral relationship-based kinship network system according to the present invention.

### DETAILED DESCRIPTION OF THE INVENTION

The following further describes the present invention with reference to specific embodiments.

Referring to Fig. 1, a quinquelateral relationship-based kinship network system provided in the present invention comprises an Internet platform, a registration and login module, an information storage module, an information modification module, an opinion feedback module, a system function module, and a background management module. The Internet platform is connected to the registration and login module, and the registration and login module comprises a registration unit and a login unit. The registration unit is connected to an information storage module, and the information storage module comprises a basic information collection unit, a basic information matching unit, and a basic information storage unit. The basic information collection unit is configured to collect information comprising an avatar, a name, an identity card number, an ancestral home, personal academic background information, family member information, and a contact method. The contact method comprises any one or more of a mobile phone number, a fixed-line number, a QQ number, a WeChat account number, and a Weibo account number. The basic information matching unit is provided with a prestored information architecture, a screening and analysis system, and an information matching system. The basic information storage unit uses a five-element theory to construct a kinship network centered on a user, in which the user is separately connected to the father, mother, child, spouse, and brother/sister of the user, and then construct kinship networks respectively centered on the father, mother, child, spouse, and brother/sister of the user, so as to form a whole quinquelateral spectrum by using an individual family as the smallest unit. The login unit is separately connected to the information modification module, the opinion feedback module, and the system function module, and the system function module comprises a search unit, a chatting unit, a game unit, and a sharing platform. The information modification module is connected to the basic information matching unit in the information storage module. The Internet platform, the registration and login module, the information storage module, the information modification module, the opinion feedback module, and the system function module are all connected to the background management module, and the background management module comprises an operation and management unit, a system maintenance unit, an opinion feedback receiving unit, and a system program modification unit.

A working procedure of the system includes the following steps:
S1: A user accesses the registration and login module by using the Internet platform, registers with the registration unit in the registration and login module, and fills in personal information according to a prompt. The basic information collection unit in the information storage module collects the personal information that is filled in by the user and that comprises an avatar, a name, an identity card number, an ancestral home, personal academic background information, family member information, and a contact method, wherein the contact method comprises any one or more of a mobile phone number, a fixed-line number, a QQ number, a WeChat account number, and a Weibo account number, and inputs the personal information of the user into the prestored information architecture in the basic information matching unit. The information input into the prestored information architecture is then analyzed and matched by using the screening and analysis system and the information matching system. A final result of matching is stored in the basic information storage unit. The basic information storage unit uses a five-element theory to construct a kinship network centered on the user, in which the user is separately connected to the father, mother, child, spouse, and brother/sister of the user, and then construct kinship networks respectively centered on the father, mother, child, spouse, and brother/sister of the user, so as to form a whole quinquelateral spectrum by using an individual family as the smallest unit.
S2: The user accesses the registration and login module by using the login unit after successful registration, wherein the user may modify the registered personal information by using the information modification module, the modified content is synchronized to the basic information matching unit and then stored in the basic information storage unit. After logging in to the login unit, the user may further give an opinion about the kinship social network system, and the opinion given by the user is transferred to a background management module, so that an administrator modifies and improves the kinship social network system according to the received opinion. After logging in to the login unit with the user's identity, the user may further access the system function module, and perform, by using a search unit, a chatting unit, a game unit, and a sharing platform in the system function module respectively, operations of looking for someone, chatting, playing a game, and sharing information.
S3: The operation and management unit, the system maintenance unit, the opinion feedback receiving unit, and the system program modification unit in the background management module supervise and control the operation processes of steps S1 and S2, and update and maintain the system in real time.

According to the social network system provided in the present invention, a social system themed with kinship is established based on an Internet platform, a kinship architectural diagram is constructed, and distances between people are narrowed. With kinship used as a link between people, a heart-to-heart bridge is built between relatives. For every user, a family system of the user can be established. In the system, a five-element theory is used, so that discrimination against females in a traditional genealogy is prevented, and the females also play an important role in the entire kinship architecture. In addition, once one user downloads and registers with the system, information about at least five persons can be obtained, thereby constantly increasing the base number of seed users, leading to viral spreading. The system further extends outwards depending on immediate relatives who are credible, so that credibility of the Internet is improved while an infinitely extending dimensional network system is established. Moreover, four features of the system: instructiveness, seriousness, interactivity, and entertainment ensure great customer loyalty of the system.

The foregoing descriptions are merely preferred specific implementations of the present invention, and the protection scope of the present invention is not limited thereto. Any equivalent replacements and changes made by a person skilled in the art according to the technical solutions and inventive ideas of the present invention within the technical scope disclosed in the present invention shall fall within the protection scope of the present invention

## Claims

1. A quinquelateral relationship-based kinship network system, comprising an Internet platform, a registration and login module, an information storage module, an information modification module, an opinion feedback module, a system function module, and a background management module, wherein the Internet platform is connected to the registration and login module, the registration and login module comprises a registration unit and a login unit, the registration unit is connected to the information storage module, the information storage module comprises a basic information collection unit, a basic information matching unit, and a basic information storage unit, the login unit is separately connected to the information modification module, the opinion feedback module, and the system function module, the system function module comprises a search unit, a chatting unit, a game unit, and a sharing platform, the information modification module is connected to the basic information matching unit in the information storage module, and the Internet platform, the registration and login module, the information storage module, the information modification module, the opinion feedback module, and the system function module are all connected to the background management module.

2. The quinquelateral relationship-based kinship network system according to claim 1, wherein the basic information collection unit is configured to collect information comprising an avatar, a name, an identity card number, an ancestral home, personal academic background information, family member information, and a contact method.

3. The quinquelateral relationship-based kinship network system according to claim 2, wherein the contact method comprises any one or more of a mobile phone number, a fixed-line number, a QQ number, a WeChat account number, and a Weibo account number.

4. The quinquelateral relationship-based kinship network system according to claim 3, wherein the basic information matching unit is provided with a prestored information architecture, a screening and analysis system, and an information matching system.

5. The quinquelateral relationship-based kinship network system according to claim 1, wherein the basic information storage unit uses a five-element theory to construct a kinship network centered on a user, in which the user is separately connected to the father, mother, child, spouse, and brother/sister of the user, and then construct kinship networks respectively centered on the father, mother, child, spouse, and brother/sister of the user, so as to form a whole quinquelateral spectrum by using an individual family as the smallest unit.

6. The quinquelateral relationship-based kinship network system according to claim 1, wherein the background management module comprises an operation and management unit, a system maintenance unit, an opinion feedback receiving unit, and a system program modification unit.

7. A working procedure of a quinquelateral relationship-based kinship network system, comprising the following steps:
S1: accessing, by a user, a registration and login module by using an Internet platform, registering with a registration unit in the registration and login module, and filling in personal information according to a prompt; and collecting, by a basic information collection unit in an information storage module, the personal information filled in by the user, inputting the personal information of the user into a basic information matching unit for analysis and matching, and storing a final result of matching in a basic information storage unit;
S2: accessing, by the user, the registration and login module by using a login unit after successful registration, wherein the user may modify the registered personal information by using an information modification module, the modified content is synchronized to the basic information matching unit and then stored in the basic information storage unit, after logging in to the login unit, the user may further give an opinion about the kinship social network system, the opinion given by the user is transferred to a background management module, so that an administrator modifies and improves the kinship social network system according to the received opinion, and after logging in to the login unit with the user's identity, the user may further access a system function module, and perform, by using a search unit, a chatting unit, a game unit, and a sharing platform in the system function module respectively, operations of looking for someone, chatting, playing a game, and sharing information; and
S3: supervising and controlling, by the background management module, the operation processes of steps S1 and S2, and updating and maintaining the system in real time.
